# EUROPÄISCHE PATENTSCHRIFT

(11) **EP 3 052 253 B1**
(45) Veröffentlichungstag und Bekanntmachung des Hinweises auf die Patenterteilung: **28.04.2021**
(21) Anmeldenummer: 14792384.1
(22) Anmeldetag: 26.09.2014
(51) Int. Cl.: B08B 9/055, F16L 55/28, F16L 55/40, F16L 55/38, F16L 101/12, F16L 101/30

(54) **MANSCHETTE FÜR EINEN INSPEKTIONS- ODER REINIGUNGSMOLCH**
COLLAR FOR AN INSPECTION OR CLEANING PIG
COUPELLE POUR UN RACLEUR D' INSPECTION OU NETTOYAGE

(30) Priorität: 04.10.2013 DE 102013111019
(43) Veröffentlichungstag der Anmeldung: 10.08.2016
(73) Patentinhaber: Rosen Swiss AG, 6370 Stans (CH)
(72) Erfinder: FIELERS, Frank, 49808 Lingen (DE); KÜHBACH, Nico, 49811 Lingen (DE)
(74) Vertreter: Busse & Busse
(86) Internationale Anmeldenummer: PCT/EP2014/002616
(87) Internationale Veröffentlichungsnummer: WO 2015/049041

(56) Entgegenhaltungen:
- US-A- 2 328 093

## Beschreibung

Die vorliegende Erfindung betrifft eine Manschette für einen Reinigungs- oder Inspektionsmolch, der in einer Rohrleitung und durch diese hindurch bewegbar ist, mit einem bezogen auf eine Längsmittelachse der Manschette inneren Befestigungsbereich zur Festlegung der Manschette an dem Reinigungs- oder Inspektionsmolch und mit einem Anlagebereich, der zur Anlage an einer Rohrwand vorgesehen ist und der Teil eines Außensegments ist, welches mit dem inneren Befestigungsbereich verbunden ist, wobei der innere Befestigungsbereich bezogen auf eine Bewegungsrichtung des Molches dem Anlagebereich vorzugsweise zumindest teilweise vorlaufend ist. Des Weiteren betrifft die Erfindung einen Molch zur Inspektion oder Reinigung von Pipelinerohren.

Passiv betriebene Molche werden zum Inspizieren und Reinigen von Rohrleitungen, beispielsweise von Gas- oder Ölpipelines verwendet. Für den vom Medium ausgeübten Vortrieb sind die Molche mit Manschetten versehen, die in Richtung ihrer Längsmittelachse, die auch der Längsmittelachse der Pipeline entspricht, den freien Rohrleitungsquerschnitt möglichst gut abdecken. Das Medium drückt gegen die Manschetten und treibt den Molch hierdurch voran. Bekannt sind Manschetten, die in Richtung Ihrer flächigen Erstreckung im Wesentlichen plan ausgebildet sind. Diese scheibenförmigen Manschetten werden auch "Disks" genannt. Als "Cups" werden Manschetten bezeichnet, die zu den Rändern hin und bezüglich einer Vorzugs- und Vorwärtsbewegungsrichtung nach hinten gebogen oder abgeknickt sind. Insofern ist der innere Befestigungsbereich zumindest mit seiner in die Bewegungsrichtung nach vorne weisenden Vorderseite dem auf dem nach hinten gebogenen äußeren Außensegment befindlichen Anlagebereich vorlaufend. Der äußerste Randbereich dieser Manschetten kann sich sogar flächig zur Rohrinnenwand erstrecken. Beide Arten von Manschetten sind in der DE 195 02 764 A1 gezeigt. Gerade bei diesen Cups wie aber auch bei den Disks gibt es bei einer Differenzdruckerhöhung aufgrund von beispielsweise zu stark verjüngten Rohrinnendurchmessern, in denen der Molch stark verlangsamt wird oder steckenbleiben kann, insbesondere bei gasdurchströmten Pipelines das Problem, das bei Differenzdruckerhöhung die Reibung der Manschette an der Rohrinnenwand stark zunimmt. Dies führt bei Überwindung der Reibungskraft zu einem sogenannten Vorwärtschießen des Molches mit stark erhöhter Geschwindigkeit, die außerhalb der für eine Reinigung oder Messung vorgegebenen Toleranzen liegt. Das Steckenbleiben und Vorwärtsschießen des Molches führt zu ungewünschten Druckschwankungen in der Rohrleitung bzw. Pipeline.

Aus der US 2,328,093 ist ein Reinigungsmolch mit einer Manschette bekannt, die aus zwei gelenkig verbundenen Hälften besteht und die über zwei mit den jeweiligen Hälften verbundenen Abspannsegmente in Form von Gelenkverbindern abgestützt beziehungsweise zusammengeklappt wird. Ein Molch, der in einem durch Verformung oder Verschmutzung verengten Rohrquerschnitt festgefahren ist, kann mit zusammengeklappter Manschette über Kabel aus der Blockadestellung herausgezogen werden. Dabei wird das Zusammenklappen durch ein rückseitig am Molch angebrachtes Rückzugskabel getätigt.

Es ist Aufgabe der vorliegenden Erfindung, eine Manschette und einen Molch zur Verfügung zu stellen, mit denen eine Beruhigung des Laufverhaltens eines Molches in der Pipeline ermöglicht wird.

Die Aufgabe wird gelöst durch einen Gegenstand nach Anspruch 1 sowie durch einen Gegenstand nach Anspruch 10. Weitere vorteilhafte Ausgestaltungen der Erfindung sind den auf Anspruch 1 rückbezogenen Unteransprüchen zu entnehmen.

Es ist vorgesehen, dass die Manschette ein Abspannsegment umfasst, dessen erstes Ende an dem Außensegment angeordnet und dessen anderes, zweites Ende bezogen auf die Längsmittelachse weiter zu dieser hin und dem ersten Ende bezogen auf eine Bewegungsrichtung des Molches nachlaufend angeordnet ist. Hierdurch kann ein Teil der Manschette, der zu einer Umlenkung der Antriebskraft in Richtung von der Längsmittelachse weg in Richtung Rohrwand führen würde, durch das Abspannelement oder -segment abgedeckt werden. Das Abspannsegment ist hierbei so angeordnet, dass eine Differenzdruckerhöhung zu einer teilweisen Erhöhung des Drucks in Richtung der Längsmittelachse führt. Das Abspannelement zieht somit das Außensegment der Manschette nach innen, was dem verstärkten Druck in Richtung nach außen entgegenwirkt. Im Idealfall können sich die verstärkten Drücke in Richtung der Längsmittelachse und entgegengesetzt hierzu nach außen kompensieren beziehungsweise so eingestellt werden, dass bei typischerweise zu erwartenden Querschnittsänderungen in der Rohrleitung oder Pipeline die durch die Querschnittsänderung bewirkte Reibungserhöhung in Summe kompensiert wird. Der Druck nach außen ergibt sich -betrachtet in Richtung der Längsmittelachse- durch die nicht von dem Abspannsegment abgedeckten Manschettenbereiche, die bei Erhöhung des Differenzdruckes im Falle einer Fahrtverlangsamung oder einem Steckenbleiben des Molches verstärkt nach außen gedrückt werden und somit die Reibung der Manschette an der Rohrwand der Pipeline erhöhen. Erfindungsgemäß wird somit die mit Differenzdruck beaufschlagte Geometrie der Manschette zur Verringerung der Radialkraft auf die Rohrleitungswand variiert. Die nachlaufende Anordnung des nach innen liegenden, zweiten Endes führt zur Ausbildung einer Fläche, die unabhängig von der Form des Abspannelements bei Krafteinwirkung auf diese Fläche eine resultierende Kraft in Richtung der Längsmittelachse aufweist.

Durch eine erfindungsgemäße Ausbildung der Manschette zeigt ein hiermit versehener Molch ein ruhigeres Laufverhalten. Der Verschleiß der Manschetten ist verringert und die Druckschwankungen in der Pipeline sind reduziert.

Vorzugsweise ist das Abspannsegment an dem Außensegment in Richtung der Längsmittelachse beabstandet von dem Anlagebereich angeordnet, während das zweite Ende an dem Befestigungsbereich oder einem Molchteil festlegbar oder festgelegt ist. Die Anordnung des Abspannsegments ist dergestalt, dass das Abspannsegment auf einer nach hinten oder innen gewandten Seite und beabstandet von dem äußersten Umfang des Außensegments angeordnet ist. Ein Teil des Außensegments ist immer noch unmittelbar durch das Medium anströmbar während ein nach innen liegender, anströmbarer Teil der Manschette nun durch das Abspannelement gebildet wird. Eine Differenzdruckerhöhung auf das Abspannelement führt zu einer Kraft in Richtung der Längsmittelachse.

Eine weitere vorteilhafte Ausbildung der Erfindung zeichnet sich dadurch aus, dass das Abspannsegment wenigstens teilweise einen Hohlraum zum Außensegment und/oder zum inneren Befestigungsbereich ausbildet. Zumindest ist der Hohlraum in der Befestigungssituation am Molch vorhanden. Die Manschette würde dann in Ihrer nicht montierten Form einen Hinterschneidung oder Ausnehmung aufweisen. Durch die Ausbildung mit einem Hohlraum ist das vorzugsweise flexible, biegsame oder abschnittsweise gelenkig ausgebildete Abspannelement unter Differenzdruckerhöhung besser beweglich.

Für einen Druckausgleich kann die Manschette mit einer Druckausgleichsöffnung versehen werden, die bezüglich einer Bewegungsrichtung von vorne zu dem Hohlraum führt. Durch die Größe der Druckausgleichsöffnung lassen sich die Dämpfungseigenschaften der Manschette beeinflussen. So führt eine kleinere Öffnung zu einer langsameren Formveränderung der Manschette. Um einen Bypassstrom über den gesamten Molch ermöglichen zu können, kann auch das Abspannsegment mit Öffnungen versehen werden. Diese Öffnungen müssen allerdings in Summe über die gesamte Querschnittsfläche kleiner sein als die vordere Druckausgleichsöffnung(en), damit der überwiegende Druckanteil an dem Abspannsegment abfällt.

Eine gezielte Form unter Druck und eine gewünschte Bewegbarkeit des Abspannsegments wird dann erreicht, wenn das Abspannsegment mit zumindest einem Gelenk zur Zwangsführung einzelner Abspannsegmentabschnitte versehen ist. Bevorzugt weist das Abspannsegment zwei, drei oder mehr Segmentabschnitte auf, die über Gelenke beispielsweise in Form von Filmscharnieren verbunden sind. Die Verwendung von Gelenken führt zur Ausbildung einer gewünschten Querschnittsform des Abspannsegments. Eine gezielte Formänderung kann durch unterschiedlich dicke Bereiche des Segments und eine hiermit einhergehende unterschiedliche Steifigkeit der jeweiligen Bereiche erreicht werden.

Vorzugsweise ist ein zwischen zwei Gelenken befindlicher Abspannsegmentabschnitt gegenüber dem Gelenk verdickt ausgebildet ist, um eine ausreichende Stabilität aufzuweisen.

Alternativ oder ergänzend zu durch Dünnstellen ausgebildeten Gelenken oder Gelenkbereichen kann das Abspannsegment aus unterschiedlichen Materialien gefertigt sein. So können beispielsweise ein weiches Kunststoffmaterial für die Gelenke und ein steifes Kunststoffmaterial für die übrigen Teile des Abspannsegments verwendet werden.

Die Montage einer erfindungsgemäßen Manschette ist verbessert möglich, wenn das Abspannsegment an seinem zweiten Ende einen Befestigungsflansch insbesondere zur Einführung in einen komplementär ausgebildeten Bereiches des Molches aufweist. Beispielsweise kann es sich um ein Einsteckteil handeln, welches über Schrauben am Molch gesichert ist.

Zur verbesserten Anpassung an unterschiedliche Rohrinnendurchmesser kann das Abspannsegment in Umfangsrichtung Dünnbereich aufweisen. Diese trennen Bereich des Abspannsegments, die stabiler und insbesondere dicker ausgebildet sind. Somit kann sich bei einer Verringerung oder Vergrößerung des freien Rohrleitungsdurchmessers und einem hiermit einhergehenden Stauchen oder Verbreitern der Manschette auch das Abspannelement besser stauchen oder verbreitern.

Vorzugsweise ist die Manschette mit dem Abspannsegment einstückig und insbesondere aus Polyurethan hergestellt. Mit diesem Material können vergleichsweise komplexe Manschettenformen einfach hergestellt werden.

Die vorbeschriebenen Vorteile kommen auch einem Molch zur Reinigung oder Inspektion von Pipeline-Rohren zu, der eine vor- oder nachbeschriebene Manschette aufweist.

Weitere Vorteile und Einzelheiten der Erfindung lassen sich der nachfolgenden Figurenbeschreibung entnehmen. Schematisch dargestellt zeigt:
- Fig. 1: eine teilweise Schnittansicht einer Vorrichtung nach dem Stand der Technik,
- Fig. 2: eine teilweise Schnittansicht einer Vorrichtung nach der Erfindung,
- Fig. 3: einen weiteren erfindungsgemäßen Gegenstand in einer teilweisen Schnittansicht,
- Fig. 4: einen weiteren erfindungsgemäßen Gegenstand in einer teilweisen Schnittansicht,
- Fig. 5: einen weiteren erfindungsgemäßen Gegenstand in einer teilweisen Schnittansicht,
- Fig. 6: einen weiteren erfindungsgemäßen Gegenstand in einer teilweisen Schnittansicht,
- Fig. 7: eine Teilansicht eines weiteren erfindungsgemäßen Gegenstands in einer perspektivischen Darstellung.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

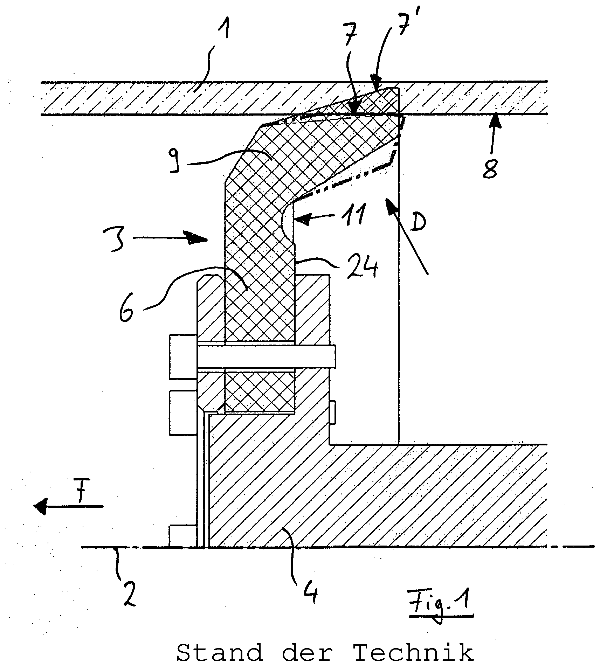

Ein Gegenstand nach dem Oberbegriff des Anspruchs 1 ist in der Fig. 1 in einer teilweisen Schnittansicht, die einen oberen Teil eines erfindungsgemäßen Molches darstellt, gezeigt. Der nur mit einem vorderen Bereich dargestellte Molch bewegt sich in Richtung F durch eine Rohrleitung, von der eine Wand 1 abschnittsweise dargestellt ist. Eine erfindungsgemäße Manschette für diesen als Reinigungs- oder Inspektionsmolch ausgebildeten Molch weist eine Längsmittelachse 2 auf, um die die Manschette 3 herum ausgebildet ist. Die Längsmittelachse 2 weist in Richtung einer Längsmittelachse der Rohrleitung.

Die Manschette 3 weist einen an einem Molchkörper 4 befestigten, inneren Befestigungsbereich 6 auf sowie einen strichpunktiert gezeichneten, zur Rohrwand hin gerichteten Anlagebereich 7, der gegen eine Innenseite 8 der Rohrwand 1 drückt. In der entspannten Form der Manschette wäre der Anlagebereich 7 als Anlagebereich 7' weiter nach außen ausgestellt. Der Anlagebereich 7 bzw. 7' ist Teil eines Außensegments 9, welches im vorliegenden Fall über eine Dünnstelle 11 mit dem inneren Befestigungsbereich 6 verbunden ist. Bei der Manschette 3 handelt es sich um eine(n) üblichen Cup, wie sie aus dem Stand der Technik bekannt ist.

Bei einer Differenzdruckerhöhung aufgrund einer Verlangsamung der Bewegung des Molches ergibt sich eine zusätzliche Kraftkomponente in Richtung des Pfeils D, die zu einer Erhöhung der Reibung an der Rohrwand 1 führt.

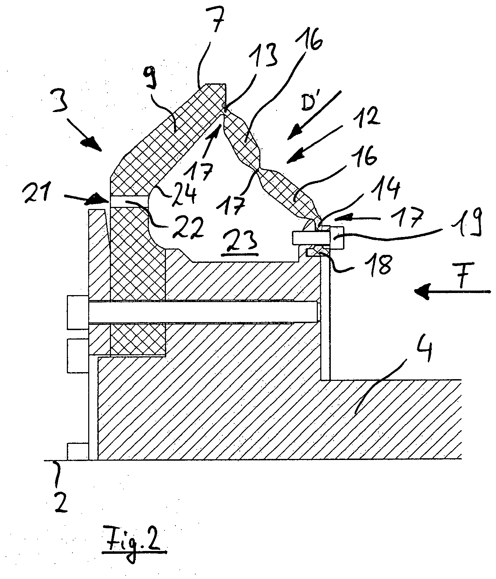

Ein Molch bzw. eine Manschette 3 weist ein Abspannsegment 12 auf, welches ein erstes Ende 13 umfasst, das an dem Außensegment 9 angeordnet ist, sowie ein zweites Ende 14, welches auf Seiten des Molchkörpers 4 und somit zur Längsmittelachse 2 hin angeordnet ist (Fig. 2). Darüber hinaus ist dieses zweite Ende 14 bezüglich einer Bewegungsrichtung F dem ersten Ende 13 nachgeordnet. Durch diese Anordnung ergibt sich im Fall einer Differenzdruckerhöhung aufgrund einer Situation, in der der Molch langsamer fährt oder sogar in der Rohrleitung stecken bleibt, eine zusätzliche Kraftkomponente in Richtung D' hin zu der Längsmittelachse 2, die einer Kraftkomponente in Richtung D, sofern vorhanden entgegenwirkt. Der Molch kann somit gleichmäßiger durch die Rohrleitung laufen, da er bereits bei geringeren Differenzdrücken weiterfährt und somit die sich ergebenden Differenzgeschwindigkeiten im Falle eines Überschießens geringer ausfallen.

Das erfindungsgemäße Abspannsegment 12, welches genau wie das Außensegment 9 und der Befestigungsbereich umlaufend um die Längsmittelachse 2 angeordnet ist, umfasst insgesamt 3 Gelenke 17 in Form von Filmscharnieren, die zwei dickere Abspannsegmentabschnitte 16 begrenzen.

Die Gelenke 17 sind durch Dünnstellen ausgebildet. Am Ende 14 weist das Abspannsegment 12 darüber hinaus einen Befestigungsflansch 18 auf, der in einer entsprechende Ausnehmung des Molchkörpers 4 steckt und in dieser über ein Befestigungsmittel 19 festgelegt ist. In Umfangsrichtung um die Längsmittelachse 2 herum ist eine Vielzahl solcher vorzugsweise als Schrauben ausgebildeter Befestigungsmittel vorhanden.

Eine Druckausgleichsöffnung 21 führt in einen Kanal 22 hinein, über den ein Hohlraum 23 in Druckausgleich mit dem vor dem Molch befindlichen Bereich steht.

Das Abspannsegment 12 ist bezüglich einer radialen Erstreckung der Manschette 3 nicht am äußersten Ende derselben angeordnet sondern weiter nach Innen versetzt, so dass in Längsrichtung F betrachtet ein Teil der Manschette 3 direkt von dem Medium angeströmt wird, während ein überwiegender Teil des Mediums nicht mehr gegen eine Innenoberfläche 24 des inneren Befestigungsbereichs oder des Außensegments der Manschette 3 strömt sondern gegen das Abspannsegment 12.

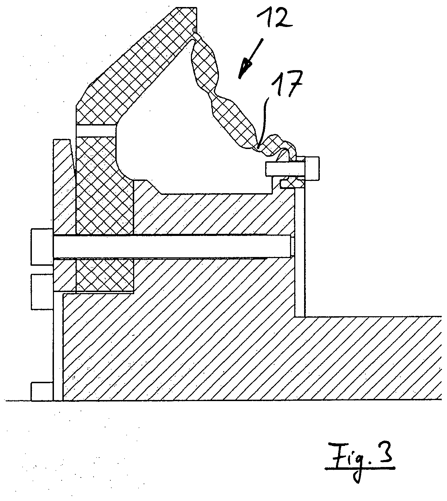

Im Ausführungsbeispiel gemäß Fig. 3 ist ebenfalls wieder eine Cup erfindungsgemäß weitergebildet, wobei hier das Abspannsegment einen zusätzlichen Abspannsegmentabschnitt 16 aufweist, der ebenfalls wieder verdickt ausgebildet und über Filmscharniere ausbildende Gelenke 17 mit dem Rest des Abspannsegments 12 verbunden ist. Die Ausführungsbeispiele der Figuren 2 und 3 sind mit Manschetten 3 versehen, die einstückig aus Polyurethan gefertigt sind.

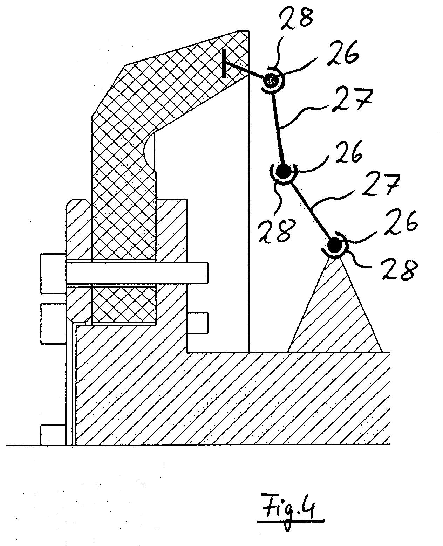

Im Ausführungsbeispiel der Fig. 4 ist das Abspannsegment mit über Gelenke 26 miteinander verbundenen starren Abschnitten 27 versehen. Hierbei kann es sich um ein Ausführungsbeispiel gemäß der Fig. 3 handeln. Es kann sich jedoch auch um tatsächlich nicht einstückig mit dem Rest der Manschette hergestellte sondern aus einem anderen Material bestehende Abspannsegmentteile handeln, deren Gelenke entsprechend der Öffnung der jeweiligen Halbschalen 28 begrenzt bewegbar ausgebildet sind.

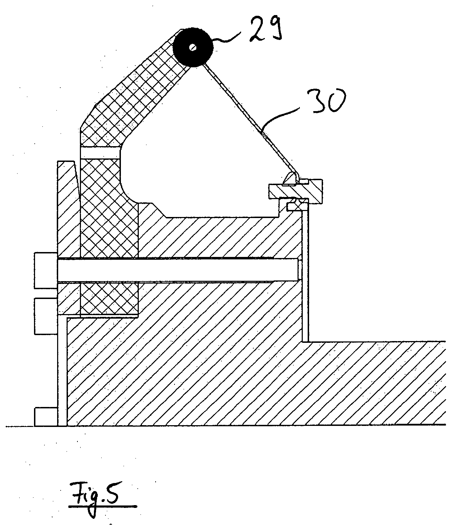

Im Ausführungsbeispiel gemäß der Fig. 5 ist das Abspannsegment durch eine Membran 30 ausgebildet, die biegsam ist und die sich unter einer Druckeinwirkung einbeulen kann. Außenseitig ist eine Rolle 29 vorgesehen, die ein zusätzliches Abrollen auf einer Rohrinnenwand bewirkt.

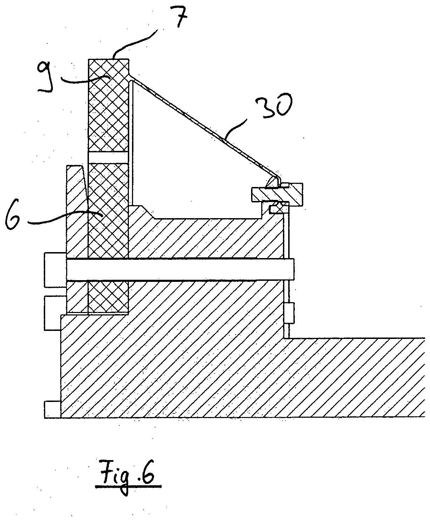

Eine herkömmliche Disk kann ebenfalls mit einem Abspannsegment 12 in Form einer Membran 30 versehen sein, wie dies in der Fig. 6 dargestellt ist.

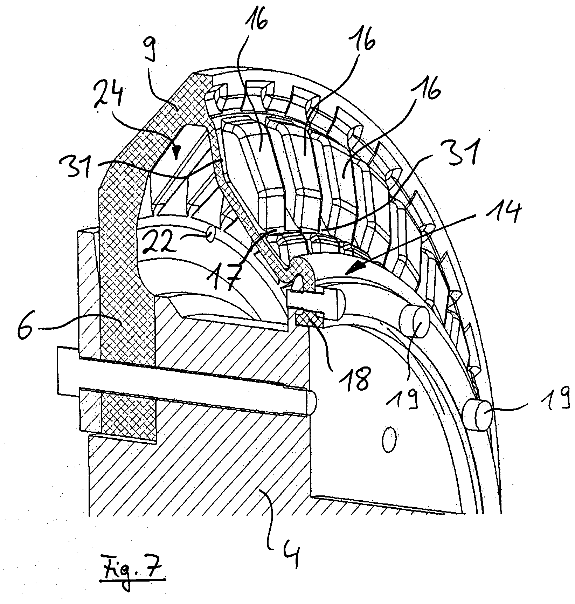

In einer Umfangsrichtung um die Längsmittelachse 2 herum kann ein erfindungsgemäßer Molch mit einer Manschette 3 versehen sein, die ein Abspannsegment 12 aufweist, welches verdickte Abspannsegmentabschnitte 16 umfasst, die durch Dünnbereich 31 voneinander getrennt sind (Fig. 7). Ein Stauchen der Manschette 3 wird hierdurch verbessert möglich, da durch die Dünnbereiche 31 das Abspannsegment 12 flexibel ausgebildet ist.

## Patentansprüche

1. Manschette für einen Reinigungs- oder Inspektionsmolch, der in einer Rohrleitung und durch diese hindurch bewegbar ist, mit einem bezogen auf eine Längsmittelachse (2) der Manschette (3) inneren Befestigungsbereich (6) zur Festlegung der Manschette (3) an dem Reinigungs- oder Inspektionsmolch und mit einem Anlagebereich (7), der zur Anlage an einer Rohrwand (1) vorgesehen ist und der Teil eines Außensegments (9) ist, welches mit dem inneren Befestigungsbereich (6) verbunden ist, wobei der innere Befestigungsbereich (6) bezogen auf eine Bewegungsrichtung (F) des Molches dem Anlagebereich (7, 7') vorzugsweise vorlaufend ist, wobei die Manschette (3) ein Abspannsegment (12) umfasst, dessen erstes Ende (13) an dem Außensegment (9) angeordnet und dessen anderes, zweites Ende (14) bezogen auf die Längsmittelachse (2) weiter zu dieser hin und dem ersten Ende (13) bezogen auf eine Bewegungsrichtung des Molches nachlaufend angeordnet ist, **dadurch gekennzeichnet, dass** das Abspannsegment (12) eine Fläche ausbildet, die unabhängig von der Form des Abspannsegments (12) bei Krafteinwirkung aufgrund einer Differenzdruckerhöhung auf diese Fläche eine resultierende Kraft in Richtung hin zur Längsmittelachse (2) aufweist, wobei das Abspannsegment (12) das Außensegment (9) der Manschette nach innen zieht.

2. Manschette nach Anspruch 1, **dadurch gekennzeichnet, dass** das Abspannsegment (12) an dem Außensegment (9)in Richtung der Längsmittelachse (2) beabstandet von dem Anlagebereich (7) angeordnet ist und das zweite Ende (14) an dem Befestigungsbereich (6) oder einem Molchteil festlegbar oder festgelegt ist.

3. Manschette nach Anspruch 1 oder 2, **dadurch gekennzeichnet, dass** das Abspannsegment (12) wenigstens teilweise einen Hohlraum (23) zum Außensegment (9) und/oder zum inneren Befestigungsbereich (6) ausbildet.

4. Manschette nach Anspruch 3, **dadurch gekennzeichnet, dass** die Manschette (3) eine Druckausgleichsöffnung (21) aufweist, die bezüglich einer Bewegungsrichtung (F) von vorne zu dem Hohlraum (23) führt.

5. Manschette nach einem der vorherigen Ansprüche, **dadurch gekennzeichnet, dass** das Abspannsegment (12) mit zumindest einem Gelenk (17) zur Zwangsführung einzelner Abspannsegmentabschnitte (16) ausgebildet ist.

6. Manschette nach Anspruch 5, **dadurch gekennzeichnet, dass** ein zwischen zwei Gelenken (17) befindlicher Abspannsegmentabschnitt (16) gegenüber dem Gelenk (17) verdickt ausgebildet ist.

7. Manschette nach einem der vorherigen Ansprüche, **dadurch gekennzeichnet, dass** das Abspannsegment (12) an seinem zweiten Ende (14) einen Befestigungsflansch (18) insbesondere zur Einführung in einen komplementär ausgebildeten Bereich aufweist.

8. Manschette nach einem der vorherigen Ansprüche, **dadurch gekennzeichnet, dass** das Abspannsegment (12) in Umfangsrichtung zur verbesserten Anpassung an unterschiedliche Rohrinnendurchmesser Dünnbereiche (31) aufweist.

9. Manschette nach einem der vorherigen Ansprüche, **dadurch gekennzeichnet, dass** die Manschette (3) mit dem Abspannsegment (12) einstückig und insbesondere aus Polyurethan hergestellt ist.

10. Molch zur Reinigung oder Inspektion von Pipeline-Rohren, **gekennzeichnet durch** eine Manschette (3) nach einem der vorherigen Ansprüche .

## Claims

1. Collar for a cleaning or inspection pig which can be moved in a pipeline and through the latter, having an inner fastening region (6) by reference to a longitudinal centre axis (2) of the collar (3) for fixing the collar (3) to the cleaning or inspection pig and having a contact region (7) which is provided as a means of contact with a pipe wall (1) and is part of an outer segment (9) connected to the inner fastening region (6), the inner fastening region (6) preferably being ahead of the contact region (7, 7') by reference to a direction of movement (F) of the pig, and the collar (3) comprises an anchoring segment (12), the first end (13) of which is disposed on the outer segment (9) and the other, second end (14) of which is disposed further towards the latter by reference to the longitudinal centre axis (2) and trailing the first end (13) by reference to a direction of movement of the pig, **characterised in that** the anchoring segment (12) forms a surface which, when a force acts on this surface due to an increase in differential pressure, has a resulting force in the direction towards the longitudinal centre axis (2) irrespective of the shape of the anchoring segment (12) and the anchoring segment (12) draws the outer segment (9) of the collar inwards.

2. Collar as claimed in claim 1, **characterised in that** the anchoring segment (12) is disposed on the outer segment (9) at a distance from the contact region (7) in the direction of the longitudinal centre axis (2) and the second end (14) can be affixed or is affixed to the fastening region (6) or to a pig part.

3. Collar as claimed in claim 1 or 2, **characterised in that** the anchoring segment (12) at least partially forms a cavity (23) in conjunction with the outer segment (9) and/or with the inner fastening region (6).

4. Collar as claimed in claim 3, **characterised in that** the collar (3) has a pressure-equalising opening (21) which runs from the front to the cavity (23) by reference to a direction of movement (F).

5. Collar as claimed in one of the preceding claims, **characterised in that** the anchoring segment (12) is provided with at least one joint (17) for forcibly guiding individual anchoring segment sections (16).

6. Collar as claimed in claim 5, **characterised in that** an anchoring segment section (16) located between two joints (17) is of a thicker design than the joint (17).

7. Collar as claimed in one of the preceding claims, **characterised in that** the anchoring segment (12) has a fastening flange (18) on its second end (14) in particular for inserting in a region of complementary design.

8. Collar as claimed in one of the preceding claims, **characterised in that** the anchoring segment (12) has thin regions (31) in the circumferential direction for improved adaptation to different pipe internal diameters.

9. Collar as claimed in one of the preceding claims, **characterised in that** the collar (3) is produced integrally with the anchoring segment (12) and in particular from polyurethane.

10. Pig for cleaning or inspecting pipeline pipes, **characterised by** a collar (3) as claimed in one of the preceding claims.

## Revendications

1. Manchon pour un racleur de nettoyage ou d'inspection, qui peut être déplacé dans une conduite et à travers celle-ci, comprenant une zone de fixation intérieure (6) par rapport à un axe longitudinal médian (2) du manchon (3), qui est destinée à la fixation du manchon (3) sur le racleur de nettoyage ou d'inspection, et comprenant une zone d'appui (7), qui est prévue pour venir en appui contre une paroi tubulaire (1) et qui fait partie d'un segment extérieur (9), lequel est relié à la zone de fixation intérieure (6), la zone de fixation intérieure (6) par rapport à une direction de déplacement (F) du racleur étant de préférence disposée en amont de la zone d'appui (7, 7'), le manchon (3) comprenant un segment d'ancrage (12) dont la première extrémité (13) est disposée sur le segment extérieur (9) et dont l'autre extrémité (14), la seconde, est disposée par rapport à l'axe longitudinal médian (2) un peu plus en direction de ce dernier et en aval de la première extrémité (13) par rapport à une direction de déplacement du racleur, **caractérisé en ce que** le segment d'ancrage (12) forme une surface qui présente, indépendamment de la forme du segment d'ancrage (12), une force résultante dans la direction de l'axe longitudinal médian (2) lors de l'application d'une force suite à une augmentation de pression différentielle sur cette surface, le segment d'ancrage (12) tirant vers l'intérieur le segment extérieur (9) du manchon.

2. Manchon selon la revendication 1, **caractérisé en ce que** le segment d'ancrage (12) est disposé sur le segment extérieur (9) à distance de la zone d'appui (7) dans la direction de l'axe longitudinal médian (2) et la seconde extrémité (14) peut être fixée ou est fixée à la zone de fixation (6) ou à une partie de racleur.

3. Manchon selon la revendication 1 ou 2, **caractérisé en ce que** le segment d'ancrage (12) forme au moins en partie une cavité (23) par rapport au segment extérieur (9) et/ou par rapport à la zone de fixation intérieure (6).

4. Manchon selon la revendication 3, **caractérisé en ce que** le manchon (3) présente une ouverture de compensation de pression (21) qui conduit de l'avant vers la cavité (23) par rapport à une direction de déplacement (F).

5. Manchon selon une des revendications précédentes, **caractérisé en ce que** le segment d'ancrage (12) est réalisé avec au moins une articulation (17) pour guider de manière forcée des sections individuelles (16) de segment d'ancrage (16).

6. Manchon selon la revendication 5, **caractérisé en ce qu'**une section (16) de segment d'ancrage qui se trouve entre deux articulations (17) est réalisée plus épaisse par rapport à l'articulation (17).

7. Manchon selon une des revendications précédentes, **caractérisé en ce que** le segment d'ancrage (12) présente à sa seconde extrémité (14) une bride de fixation (18) en particulier pour l'introduction dans une zone réalisée de manière complémentaire.

8. Manchon selon une des revendications précédentes, **caractérisé en ce que** le segment d'ancrage (12) présente des zones amincies (31) dans la direction périphérique pour améliorer l'adaptation aux différences de diamètres intérieurs des tubes.

9. Manchon selon une des revendications précédentes, **caractérisé en ce que** le manchon (3) est réalisé d'une seule pièce avec le segment d'ancrage (12) et en particulier en polyuréthanne.

10. Racleur destiné au nettoyage ou à l'inspection de conduites d'une canalisation, **caractérisé par** un manchon (3) selon une des revendications précédentes.
